# EUROPÄISCHE PATENTANMELDUNG

(11) **EP 3 253 003 A1**
(43) Veröffentlichungstag der Anmeldung: **06.12.2017**
(21) Anmeldenummer: 16172025.5
(22) Anmeldetag: 30.05.2016
(51) Int. Cl.: H04L 12/58, H04L 12/18

(54) **VERFAHREN UND SYSTEM ZUM VERTEILEN VON DATEN, DIE INFORMATIONEN AUFWEISEN, IN MINDESTENS EINEM DEFINIERTEN GEBIET**

(71) Anmelder: Deutsche Telekom AG, 53113 Bonn (DE)
(72) Erfinder: LANGE, Christoph, 10318 Berlin (DE); KOSIANKOWSKI, Dirk, 15732 Eichwalde (DE)
(74) Vertreter: Vossius & Partner Patentanwälte Rechtsanwälte mbB

(57) **Zusammenfassung**

Verfahren zum Verteilen von Daten, die Informationen aufweisen, in mindestens einem definierten Gebiet, wobei das Verfahren folgende Verfahrensschritte aufweist: Empfangen der Daten von mindestens einer Informationsquelle; Automatisiertes Feststellen eines Gebietsrelevanzwertes der empfangenen Daten zu einem definierten Gebiet; Automatisiertes Feststellen eines Prioritätswertes der empfangenen Daten; Speichern der empfangenen Daten zusammen mit dem zugehörigen Gebietsrelevanzwert zu dem definierten Gebiet und dem zugehörigen Prioritätswert in mindestens einer Datensammlung; und Akustische und/oder optische Ausgabe der Daten aus der Datensammlung in dem definierten Gebiet abhängig von dem zugehörigen Gebietsrelevanzwert für das definierte Gebiet und dem Prioritätswert.

## Beschreibung

Die vorliegende Erfindung bezieht sich allgemein auf das Gebiet der Telekommunikationsnetze und deren Anwendung zur zielgerichteten Information der Öffentlichkeit. Im Speziellen betrifft die Erfindung ein Verfahren und ein System, das es gestattet, sowohl Werbeinformationen oder Location Based Services aber auch Warnungen in Katastrophenfällen an breite Bevölkerungsgruppen zu verteilen.

Neue Übertragungstechniken entwickeln sich mit zunehmender Geschwindigkeit und gestatten die drahtlose Anbindung mobiler Geräte, insbesondere über kurze Entfernungen. Damit wird die bidirektionale Übertragung von Daten und Informationen von den Zugangspunkten in das Netz hinein zunehmend wichtiger - das sogenannte Backhauling. Als Übertragungsmittel beim Backhauling kommen klassische Telekommunikationsnetze ebenso in Frage, wie bereits bestehende, in erster Linie aber für andere Zwecke errichtete, Infrastrukturen, die zur Kommunikation mitbenutzt werden können, bevorzugt Leitungen des Energieversorgungsnetzes oder Leitungen des Kabelfernsehnetzes.

Darüber hinaus erfordern neue Wege der Mediennutzung die Verwendung neuer und/oder alternativer Wege bei der Warnung und/oder Information der Bevölkerung in Katastrophenfällen. Klassisch wurde dazu bisher bevorzugt der UKW-Rundfunk genutzt, der heutzutage jedoch nicht mehr alle Bewohner in einer Region oder einem Gebiet erreicht.

Zusätzlich ergeben sich aus neuen technische Möglichkeiten, wie der Elektromobilität, immer wieder neue Infrastrukturerfordernisse. Im Fall der Elektromobilität ist die Errichtung eines Netzes von Stromtankstellen im öffentlichen Raum erforderlich. Diese neuen Infrastrukturelemente eröffnen jedoch auch neue Möglichkeiten zur Informationsverteilung, wenn sie mit bereits bestehenden Infrastrukturelementen gekoppelt werden, bevorzugt mit existierenden Straßenlaternen.

Regionale oder lokale Information der Bevölkerung im öffentlichen Raum wird derzeit hauptsächlich über Werbetafeln oder andere mechanisch oder elektronisch veränderbare Anzeigemöglichkeiten erreicht. Zudem etabliert sich parallel die Informationsübertragung über Mobilfunknetze und/oder andere Funknetze, bevorzugt WLAN, über die auf Smartphones genutzten Anwendungen (Apps), bevorzugt zur Versendung von Werbeinformationen in Form von Gutscheinen für Restaurants oder Geschäfte oder allgemeiner die Bereitstellung von Location Based Services (LBS).

Neben der direkten Ansprache über Lautsprecherwagen sind aktuell auch die Nutzung von Apps auf Mobiltelefonen, bevorzugt KATWARN [1], und die Verwendung des Rundfunks klassische Wege, um Unwetter- und Katastrophenwarnungen an die Bevölkerung zu übermitteln.

Mit der zunehmenden Nutzung von DAB- oder Internet-basierten Verbreitungswegen für Radioprogramme ist jedoch nicht mehr sichergestellt, dass tatsächlich regionale Sender gehört werden, die dann entsprechend regionale Warnungen herausgeben. Deshalb ist es notwendig, entsprechend der Veränderungen in der Technik und der Nutzungsgewohnheiten alternative Wege zum Verteilen von Warnmeldungen zu finden.

Mit den Mobiltelefon-Apps "KATWARN" [1] oder der Warn-App "NINA" [2] beispielsweise können heute schon Warnmeldungen an die Bevölkerung über moderne Kommunikationswege verteilt werden. Vom Bundesamt für Bevölkerungsschutz und Katastrophenhilfe wurde dafür das satellitengestützte Warnsystem SatWaS und MoWaS [3] entwickelt, um u.a. auch Mobiltelefone über die Mobilfunknetzbetreiber zu erreichen. Leider kann nicht sichergestellt werden, dass so jeder Nutzer erreichbar ist, da nur bei einer speziellen, auf dem Smartphone installierten App, die Anzeige erfolgt.

Als das zugrundeliegende Problem ist anzusehen, dass nach einer Möglichkeit zum Verteilen von Daten, die Informationen aufweisen, in mindestens einem definierten Gebiet gesucht wird. Wobei die Daten sowohl Informationen in Katastrophenfällen als auch Werbeinformation und/oder LBS beinhalten sollen.

Unter dem Begriff definiertes Gebiet sind geografische, räumliche und/oder organisatorische Bereiche zusammengefasst. Im Speziellen kann ein Postleitzahlbereich als definiertes Gebiet betrachtet werden. Alternativ oder zusätzlich kann aber auch einem bestimmten Geokoordinatenbereich, eine bestimmte Region, eine bestimmte Stadt, ein bestimmter Stadtteil, eine bestimmte Straße, ein bestimmter Straßenabschnitt, ein bestimmter Gebäudekomplex, ein bestimmtes Gebäude, ein bestimmtes Stockwerk, ein bestimmter Raum und/oder ein bestimmter Teilbereich eines Raums, jeweils als definiertes Gebiet bezeichnet werden. Weiter kann auch ein bestimmter Bereich in einem Telekommunikationsnetz oder Energieversorgungsnetz als definiertes Gebiet bezeichnet werden, im Speziellen sind Funkzellen und/oder Zweige des Energieversorgungsnetzes als definierte Gebiete zu bezeichnen. Ein definiertes Gebiet kann weitere definierte Gebiete umfassen. Die weiteren definierten Gebiete können auch als Untergebiete bezeichnet werden.

Die Aufgabe der vorliegenden Erfindung ist demnach das Bereitstellen eines Verfahrens und eines Systems zum Verteilen von Daten, die Informationen aufweisen, in mindestens einem definierten Gebiet. Die Aufgabe wird mit den Merkmalen der unabhängigen Patentansprüche gelöst. Die abhängigen Patentansprüche beziehen sich auf weitere Aspekte der Erfindung.

Gemäß einem Aspekt der Erfindung wird ein Verfahren bereit gestellt, zum Verteilen von Daten, die Informationen aufweisen, in mindestens einem definierten Gebiet. Das Verfahren weist folgende Verfahrensschritte auf: a) Empfangen der Daten von mindestens einer Informationsquelle; b) automatisiertes Feststellen eines Gebietsrelevanzwertes der empfangenen Daten zu einem definierten Gebiet; c) automatisiertes Feststellen eines Prioritätswertes der empfangenen Daten; d) Speichern der empfangenen Daten zusammen mit dem zugehörigen Gebietsrelevanzwert zu dem definierten Gebiet und dem zugehörigen Prioritätswert in mindestens einer Datensammlung; und e) akustische und/oder optische Ausgabe der Daten aus der Datensammlung in dem definierten Gebiet abhängig von dem zugehörigen Gebietsrelevanzwert für das definierte Gebiet und dem Prioritätswert.

Eine optische Ausgabe hat den Vorteil, dass auch gehörgeschädigte Personen die Ausgabe wahrnehmen können. Eine akustische Ausgabe hat den Vorteil, dass auch sehgeschädigte Personen die Ausgabe wahrnehmen können. Die Kombination aus beiden Ausgabeformen ist bevorzugt gegenüber der jeweilig einzelnen Ausgabeform.

In einem Aspekt der Erfindung werden in dem Verfahren die Daten zusammen mit dem zugehörigen Gebietsrelevanzwert zu dem definierten Gebiet abhängig von dem zugehörigen Prioritätswert in einer von mindestens zwei Datensammlungen gespeichert werden, jeder Datensammlung wird ein Datensammlung-Prioritätswert zugeordnet, und die Datensammlung-Prioritätswerte unterscheiden sich.

In einem Aspekt der Erfindung weist der Verfahrensschritt e) folgende Verfahrensschritte auf: Ein Überprüfen ob Daten in der Datensammlung mit dem höchsten Datensammlung-Prioritätswert vorhanden sind und falls in der Datensammlung mit dem höchsten Datensammlung-Prioritätswert Daten vorhanden sind, Ausgeben der Daten abhängig von dem Prioritätswert der Daten. Alternativ, falls in der Datensammlung keine Daten vorhanden sind, Verwenden des in absteigender Reihe folgenden Datensammlung-Prioritätswertes und Wiederholen der Schritte der Überprüfung und gegebenenfalls der Ausgabe.

In einem Aspekt der Erfindung weist der Verfahrensschritt e) folgende Verfahrensschritte auf: Ein Überprüfen ob Daten in der Datensammlung mit dem höchsten Datensammlung-Prioritätswert vorhanden sind und falls in der Datensammlung mit dem höchsten Datensammlung-Prioritätswert Daten vorhanden sind, Ausgeben der Daten abhängig von dem Prioritätswert der Daten. Alternativ, falls in der Datensammlung keine Daten vorhanden sind, Verwenden des in absteigender Reihe folgenden Datensammlung-Prioritätswertes und Wiederholen der Schritte der Überprüfung und gegebenenfalls der Ausgabe. Die Überprüfung wird kontinuierlich durchgeführt, so dass regelmäßig überprüft wird, ob in der der Datensammlung mit dem höchsten Datensammlung-Prioritätswert Daten vorhanden sind.

In einem Aspekt der Erfindung werden die Daten zur akustischen und/oder optischen Ausgabe an mindestens eine Ansteuereinheit gesendet, wobei die Ansteuereinheit dem definierten Gebiet zugeordnet ist.

In einem Aspekt der Erfindung werden die Daten zur akustischen und/oder optischen Ausgabe von der Ansteuereinheit an mindestens eine akustische und/oder optische Ausgabevorrichtung gesendet, wobei sich die akustische und/oder optische Ausgabevorrichtung in dem definierten Gebiet befindet; und wobei die akustische und/oder optische Ausgabevorrichtung die Daten in geeigneter Weise in dem definierten Gebiet ausgibt.

In einem Aspekt der Erfindung werden die Daten von der Ausgabeeinheit von und zu der Ansteuereinheit über ein Telekommunikationsnetz übertragen.

In einem Aspekt der Erfindung werden die Daten von der die Ansteuereinheit von und zu der akustischen und/oder optischen Ausgabevorrichtung über ein Telekommunikationsnetz und/oder ein Energieversorgungsnetz übertragen.

In einem Aspekt der Erfindung werden Datenpakete empfangen, die von mindestens einer Informationsquelle gesendet werden, wobei die mindestens eine Informationsquelle Datenpakte sendet, die von kommerziellen Nutzern bereitgestellt werden.

In einem Aspekt der Erfindung werden Datenpakete empfangen, die von mindestens einer Informationsquelle gesendet werden, wobei die mindestens eine Informationsquelle Datenpakete sendet, die von Regierungs- und/oder Nicht-Regierungsorganisationen bereitgestellt werden und/oder die die öffentliche Sicherheit betreffen, und die Daten aus dieser Informationsquelle in der Datensammlung mit höchstem Datensammlung-Prioritätswert gespeichert werden.

In einer Ausführungsform der Erfindung werden die Daten von mindestens einer Informationsquelle empfangen. Bevorzugt beinhaltet der Begriff Informationsquelle die manuelle Eingabe von Daten und oder das automatisierte Weiterleiten von Daten aus Informations- und Warnnetzwerken.

In einer Ausführungsform der Erfindung wird ein automatisiertes Feststellen eines Gebietsrelevanzwertes der empfangenen Daten zu einem definierten Gebiet durchgeführt. Dabei wird austomatisiert entschieden, ob die empfangenen Daten für das jeweilige definierte Gebiet relevant sind.

In einer Ausführungsform der Erfindung wird ein automatisiertes Feststellen eines Prioritätswertes der empfangenen Daten durchgeführt. Dabei wird austomatisiert entschieden, welche Priorität den empfangenen Daten zuzuordnen ist. Der Prioritätswert betrifft die Priorität bei der Verteilung der Daten.

In einer Ausführungsform der Erfindung wird Daten, die Informationen zur öffentlichen Sicherheit und Ordnung betreffen, bevorzugt der höchste Prioritätswert zugeordnet. Bei kommerziellen Daten, die kommerzielle Informationen bevorzugt Werbung oder LBS beinhalten, wird die Priorität entsprechend der kommerziellen Relevanz beurteilt.

Ein weiterer Aspekt der Erfindung betrifft ein System zum Verteilen von Daten, die Informationen aufweisen, in mindestens einem definierten Gebiet. Das System weist mindestens eine Empfangseinheit auf, die konfiguriert ist, die Daten von mindestens einer Informationsquelle zu empfangen. Das System weist weiter mindestens eine erste Analyseeinheit auf, die konfiguriert ist, einen Gebietsrelevanzwert für die empfangenen Daten zu einem definierten Gebiet automatisiert festzustellen. Das System weist weiter mindestens eine zweite Analyseeinheit auf, die konfiguriert ist, einen Prioritätswert für die empfangenen Daten automatisiert festzustellen. Das System weist weiter mindestens eine Speichereinheit auf, die konfiguriert ist, die empfangenen Daten zusammen mit dem Gebietsrelevanzwert zu dem definierten Gebiet und dem Prioritätswert in mindestens einer Datensammlung zu speichern. Das System weist weiter mindestens eine Ausgabeeinheit auf, die konfiguriert ist, die Daten aus der Datensammlung in dem definierten Gebiet akustisch und/oder optisch auszugeben, abhängig von dem zugehörigen Gebietsrelevanzwert für das definierte Gebiet und dem Prioritätswert.

In einer Ausführungsform der Erfindung sind Empfangseinheit, Analyseeinheit, Speichereinheit und Ausgabeeinheit in einer gemeinsamen Soft- und/oder Hardwareeinheit realisiert. Alternativ sind jeweils einzelne oder mehrere von Empfangseinheit, Analyseeinheit, Speichereinheit und Ausgabeeinheit in einer eigenständigen Soft- und/oder Hardwareeinheit realisiert. Die verschiedenen Soft- und/oder Hardwareeinheiten sind untereinander operativ verbunden.

In einem Aspekt der Erfindung ist die mindestens eine Speichereinheit dazu konfiguriert, die empfangenen Daten zusammen mit dem Gebietsrelevanzwert zu dem definierten Gebiet und dem Prioritätswert in mindestens einer von zwei Datensammlungen zu speichern, und weiter dazu konfiguriert ist, jeder Datensammlung einen Datensammlung-Prioritätswert zuzuordnen, und sich die Datensammlung-Prioritätswerte unterscheiden.

In einer Ausführungsform der Erfindung wird ein Speichern der empfangenen Daten zusammen mit dem zugehörigen Gebietsrelevanzwert zu dem definierten Gebiet und dem zugehörigen Prioritätswert in mindestens einer Datensammlung von einer Speichervorrichtung durchgeführt.

In einer Ausführungsform ist die Speichervorrichtung bevorzugt gegen Störungen, bevorzugt vor Unwettern oder vor Stromausfällen, aber auch vor einem unberechtigten Zugriffen Dritter geschützt. Die Speichereinheit kann eine oder mehrere Speichervorrichtungen für jeweils eine oder mehrere Datensammlungen umfassen. Die Speichervorrichtungen sind operativ miteinander verbunden.

In einem Aspekt der Erfindung ist die mindestens eine Ausgabeeinheit konfiguriert zu überprüfen, ob in der Datensammlung mit dem höchsten Datensammlung-Prioritätswert Daten vorhanden sind, und falls in der Datensammlung mit dem höchsten Datensammlung-Prioritätswert Daten vorhanden sind, die Daten in Abhängigkeit vom Prioritätswert der Daten auszugeben. Alternativ dazu, falls in der Datensammlung mit dem höchsten Datensammlung-Prioritätswert keine Daten vorhanden sind, ist die Überprüfung zu wiederholen, wobei der in absteigender Reihenfolge folgende Datensammlungs-Prioritätswert verwendet wird.

In einem Aspekt der Erfindung ist die mindestens eine Ausgabeeinheit konfiguriert zu überprüfen, ob in der Datensammlung mit dem höchsten Datensammlung-Prioritätswert Daten vorhanden sind, und falls in der Datensammlung mit dem höchsten Datensammlung-Prioritätswert Daten vorhanden sind, die Daten in Abhängigkeit vom Prioritätswert der Daten auszugeben. Alternativ dazu, falls in der Datensammlung mit dem höchsten Datensammlung-Prioritätswert keine Daten vorhanden sind, ist die Überprüfung zu wiederholen, wobei der in absteigender Reihenfolge folgende Datensammlungs-Prioritätswert verwendet wird. Die Ausgabeeinheit ist weiter dazu konfiguriert die Überprüfung kontinuierlich durchzuführen, so dass regelmäßig überprüft wird, ob in der der Datensammlung mit dem höchsten Datensammlung-Prioritätswert Daten vorhanden sind.

In einem Aspekt der Erfindung umfasst das System mindestens eine Ansteuereinheit, wobei die Ansteuereinheit konfiguriert ist, mit der Ausgabeeinheit Daten auszutauschen. Die Ausgabeeinheit ist konfiguriert, die Daten zur akustischen und/oder optischen Ausgabe an die Ansteuereinheit zu senden, wobei die Ansteuereinheit dem definierten Gebiet zugeordnet ist.

In einer Ausführungsform der Erfindung ist die Ansteuereinheit bevorzugt in einem Multifunktionsgehäuse (MFG) eines Telekommunikationsnetzbetreibers ausgeführt, das in, am oder nahe dem definierten Gebiet aufgestellt ist.

In einem Aspekt der Erfindung umfasst das System mindestens eine akustische und/oder optische Ausgabevorrichtung und die akustische und/oder optische Ausgabevorrichtung ist konfiguriert mit der Ansteuereinheit Daten auszutauschen. Die Ansteuereinheit ist konfiguriert die Daten zur akustischen und/oder optischen Ausgabe an die akustische und/oder optische Ausgabevorrichtung zu senden, wobei sich die akustische und/oder optische Ausgabevorrichtung in dem definierten Gebiet befindet und die akustische und/oder optische Ausgabevorrichtung über Mittel verfügt, die Daten in geeigneter Weise in dem definierten Gebiet auszugeben.

In einer Ausführungsform der Erfindung ist die Ausgabevorrichtung eine Beleuchtungseinrichtung und eine optische Ausgabe erfolgt über rhythmisches Ein-und Ausschalten der Beleuchtung. Alternativ oder ergänzend kann auch eine zusätzliche Warnlampe an der Beleuchtungseinrichtung ausgeführt sein. Weiter kann alternativ oder ergänzend eine akustische Ausgabe über eine Sirene und/oder Lautsprecher erfolgen, die/der an der Beleuchtungseinrichtung ausgeführt sind. Bevorzugt ist, dass verschiedene Informationen durch eine unterschiedliche Abfolge von Ein- und Ausschaltvorgängen und/oder den resultierenden Dunkel- oder Hellzeiten bzw. Laut- und Leisezeiten ausgegeben werden.

In einer Ausführungsform der Erfindung ist die Ausgabevorrichtung eine Werbetafel und die bevorzugte optische Ausgabe erfolgt über eine Displayeinheit. Die Ausgabe kann über Piktogramme, Warnsymbole, und/oder schriftliche Darstellung der Daten in verschiedenen Sprachen erfolgen.

In einer Ausführungsform der Erfindung ist die Ausgabevorrichtung eine Stromtankstelle und die akustische und oder optische Ausgabe erfolgt entweder unmittelbar über eine Signaleinrichtung an der Tankstelle und/oder mittelbar über Signaleinrichtungen wie Hupen und/oder Scheinwerfer eines mit der Tankstelle verbundenen Fahrzeuges.

In einer Ausführungsform der Erfindung ist die Ausgabevorrichtung eine Broadcastingeinrichtung. Die Broadcastingeinrichtung ist dazu konfiguriert die Informationen an umliegende erreichbare Endgeräte weiterzugeben. Die Weitergabe erfolgt über geeignete Kommunikationswege, bevorzugt über Bluetooth, WLAN, Visible Light Communication (VLC [6]) und/oder NFC.

Mehrere der oben genannten Ausgabevorrichtungen werden bevorzugt miteinander kombiniert. Damit wird eine höhere Effizienz bei der Verteilung der Daten erreicht. So ist bevorzugt eine Werbetafel an einer Beleuchtungseinrichtung oder Stromtankstelle angebracht. Weiter ist bevorzugt eine Stromtankstelle, eine Beleuchtungseinrichtung und eine Werbetafel als eine Einheit ausgeführt. Weiter ist bevorzugt eine Broadcastingeinrichtung an jeder der oben gennannten Ausgabevorrichtungen oder Kombinationen derer ausgeführt.

In einem Aspekt der Erfindung ist die Ausgabeeinheit dazu konfiguriert, die Daten von und zu der Ansteuereinheit über ein Telekommunikationsnetz zu übertragen.

In einem Aspekt der Erfindung ist die die Ansteuereinheit dazu konfiguriert, die Daten von und zu der akustischen und/oder optischen Ausgabevorrichtung über ein Telekommunikationsnetz und/oder ein Energieversorgungsnetz zu übertragen.

In einem Aspekt der Erfindung ist die Empfangseinheit dazu konfiguriert Datenpakete zu empfangen, die von mindestens einer Informationsquelle gesendet werden, wobei die mindestens eine Informationsquelle Datenpakete sendet, die von kommerziellen Nutzern bereitgestellt werden.

In einer Ausführungsform werden die Daten bevorzugt über ein Webinterface eingegeben, in dieser Ausführungsform das Webinterface eine Informationsquelle.

In einer alternativen oder ergänzenden Ausführungsform werden mit entsprechend geeigneten Empfangseinheiten von satellitengestützten Warnsystemen, bevorzugt SatWaS und MoWaS, empfangen.

In einer weiteren alternativen oder ergänzenden Ausführungsform werden mit entsprechend geeigneten Empfangseinheiten Daten von Kurznachrichten-basierten Informationsdiensten, bevorzugt Wetterwarnungen empfangen.

In einer weiteren alternativen oder ergänzenden Ausführungsform werden mit entsprechend geeigneten Empfangseinheiten Daten von internetbasierten Informationsdiensten, wie sozialen Netzwerken, anderen Apps, RSS-feeds und/oder Twitter empfangen.

In einer weiteren alternativen oder ergänzenden Ausführungsform werden mit entsprechend geeigneten Empfangseinheiten Daten von Rundfunk-basierten Informationsdiensten, bevorzugt Radiodurchsagen oder Mitteilungen über den Funk der Behörden und Organisationen mit Sicherheitsaufgaben empfangen.

In einem Aspekt der Erfindung ist die Empfangseinheit dazu konfiguriert Datenpakete zu empfangen, die von mindestens einer Informationsquelle gesendet werden, wobei die mindestens eine Informationsquelle Datenpakete sendet, die von Regierungs- und/oder Nicht-Regierungsorganisationen bereitgestellt werden und/oder die die öffentliche Sicherheit betreffen, und die Daten aus dieser Informationsquelle in der Datensammlung mit höchstem Datensammlung-Prioritätswert gespeichert werden.

In einem weiteren Aspekt der Erfindung, sowohl im System als auch im Verfahren, umfasst das definierte Gebiet mindestens einer der folgenden: ein Gebiet im öffentlichen Straßenraum, ein Gebiet in einem öffentlichen und/oder nicht-öffentlichen Gebäude und/oder Gebäudekomplex.

In einer Ausführungsform der Erfindung sind geografische, räumliche und/oder organisatorische Bereiche zu dem definierten Gebiet zusammengefasst. Beispielsweise kann ein Postleitzahlbereich als definiertes Gebiet betrachtet werden. Alternativ oder zusätzlich kann aber auch einem bestimmten Geokoordinatenbereich, eine bestimmte Region, eine bestimmte Stadt, ein bestimmter Stadtteil, eine bestimmte Straße, ein bestimmter Straßenabschnitt, ein bestimmter Gebäudekomplex, ein bestimmtes Gebäude, ein bestimmtes Stockwerk, ein bestimmter Raum und/oder ein bestimmter Teilbereich eines Raums, jeweils als definiertes Gebiet zusammengefasst werden.

In einer Ausführungsform der Erfindung beinhaltet ein definiertes Gebiet weitere definierte Gebiete, die weiteren definierten Gebiete sind Untergebiete.

### Kurze Beschreibung der Figuren

Es zeigen:
Fig. 1 eine Ausführungsform der Erfindung in einem Blockdiagram und
Fig. 2. eine Ausführungsform der Erfindung für die Verteilung von Daten an einer Straße.

### Ausführliche Beschreibung der Figuren

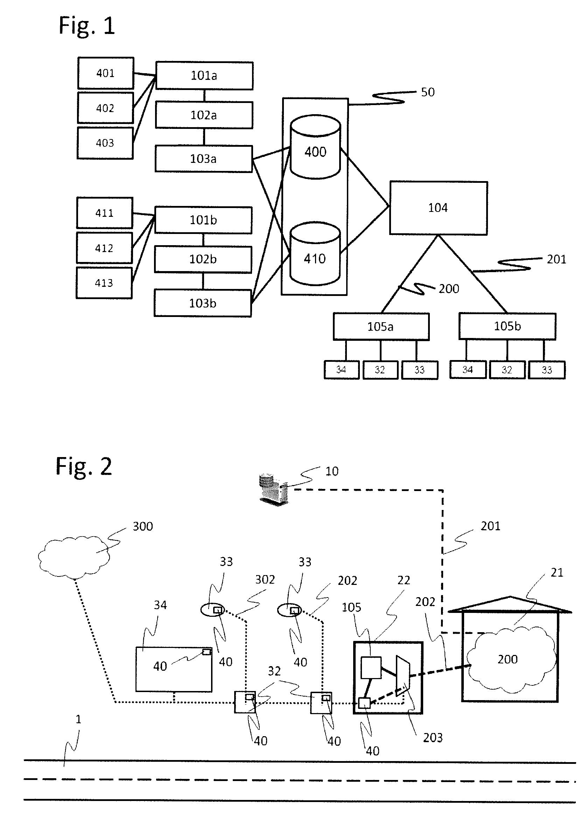

Fig. 1 zeigt eine Ausführungsform der Erfindung in einem Blockdiagram.

Die Daten 401, 402, 403 von verschiedenen Informationsquellen werden von einer Empfangseinheit 101a empfangen. Die Empfangseinheit 101a ist operativ mit einer ersten Analyseeinheit 102a verbunden. Die Analyseeinheit 102a ist operativ mit einer zweiten Analyseeinheit 103a verbunden. Die Analyseeinheit 103a ist mit einer ersten Datensammlung 400 und einer zweiten Datensammlung 410 operativ verbunden. Die erste und zweite Datensammlung 400, 410 sind operativ mit einer Ausgabeeinheit 104 verbunden. Die Ausgabeeinheit 104 ist operativ mit einer ersten Ansteuereinheit 105a und einer zweiten Ansteuereinheit 105b verbunden. Die Ansteuereinheiten 105a, 105b sind jeweils mit verschiedenen Ausgabevorrichtungen 32, 33, 34 operativ verbunden.

Die Daten 411, 412, 413 von verschiedenen Informationsquellen werden von einer Empfangseinheit 101b empfangen. Die Empfangseinheit 101b ist operativ mit einer ersten Analyseeinheit 102b verbunden. Die Analyseeinheit 102b ist operativ mit einer zweiten Analyseeinheit 103b verbunden. Die Analyseeinheit 103b ist mit der ersten Datensammlung 400 und einer zweiten Datensammlung 410 operativ verbunden.

Die Daten 401 stammen beispielsweise von einem Wetterdienst. Die Daten 402 stammen beispielsweise von einem SatWaS und/oder MoWaS Warnsystem. Die Daten 403 stammen beispielsweise von regionalen Behörden wie der Stadt, dem Landkreis, oder dem Land.

Die Daten 411 stammen beispielsweise von einem Gewerbetreibenden. Die Daten 412 stammen beispielsweise von einem Betreiber für Werbetafeln und/oder Stromtankstellen. Die Daten 403 stammen beispielsweise von regionalen Verwaltungen wie der Stadt, dem Landkreis, dem Land.

Die Daten 401, 402 und 403 sind in dieser Ausführungsform Warndaten. Die Daten 411, 412 und 413 sind in dieser Ausführungsform Info-Daten. Die erste Analyseeinheit 102a und 102b analysiert ob die empfangenen Daten 401, 402, 403 und 411, 412, 413 für das definierte Gebiet relevant sind und ermittelt den Gebietsrelevanzwert (GRW).

In einer bevorzugten Ausführungsform ist der GRW gleich eins, wenn die jeweiligen Daten 401, 402, 403,411, 412, 413 für das definierte Gebiet relevant sind und gleich null, wenn die Daten 401, 402,403,411, 412, 413 für das definierte Gebiet nicht relevant sind.

In einem zweiten Analyseschritt analysiert die zweite Analyseeinheit 103a und 104b die Priorität der Daten 401, 402, 403 und 411, 412, 413 und ermittelt der Prioritätswert (PW) der Daten.

In einer bevorzugten Ausführungsform haben die Warndaten 401, 402, 403 einen höheren PW als die Info-Daten 411, 412, 413. Innerhalb der Warndaten und Infodaten kann es weitere Abstufungen im PW geben.

In mindestens einer Speichereinheit 40 werden die Daten 401, 402, 403, 411, 412, 413 zusammen mit ihrem jeweiligen GRW und PW in mindestens einer Datensammlung 400, 410 gespeichert.

In einer bevorzugten Ausführungsform werden die Warndaten 401,402, 403 in einer ersten Datensammlung 400 und die Info-Daten in einer zweiten Datensammlung 410 gespeichert.

Erfindungsgemäß ist den Datensammlungen 400, 410 jeweils ein Datensammlung-Prioritätswert (DSPW) zugeordnet. In einer bevorzugten Ausführungsform ist der Datensammlung 400 mit den Warndaten ein höchster DSPW der Datensammlung 410 mit den Infodaten ein zweiter DSPW zugeordnet, der geringer ist als der erste DSPW.

In einer alternativen Ausführungsform, nicht in Fig. 1 dargestellt, werden alle empfangenen Daten in einer gemeinsamen Empfangseinheit empfangen, in einer gemeinsamen ersten Analyseeinheit und in einer gemeinsamen zweiten Analyseeinheit analysiert und entsprechend dem PW in mindestens zwei Datensammlungen mit unterschiedlichem DSPW gespeichert.

Die Ausgabeeinheit 104 überprüft kontinuierlich oder regelmäßig ob in der Datensammlung mit dem höchsten DSPW, d.h. in der Datensammlung 400, Daten 401,402,403 vorhanden sind.

Falls Daten 401, 402, 403 in der Datensammlung 400 vorhanden sind, werden diese zur akustischen und/oder optischen Ausgabe gemäß des PW von der Ausgabeeinheit 104 an die Ansteuereinheit 105 gesendet, wobei die Ansteuereinheit 105 dem definierten Gebiet zugeordnet ist.

Falls Daten 401, 402, 403 in der Datensammlung 400 nicht vorhanden sind, wird der in absteigender Reihenfolge nächste DSPW verwendet und Daten aus der Datensammlung mit diesem DSPW gemäß des PW von der Ausgabeeinheit 104 an die Ansteuereinheit 105 gesendet, wobei die Ansteuereinheit 105 dem definierten Gebiet zugeordnet ist. In diesem Fall würden die Daten 411, 412, 413 der Datensammlung 410 gemäß ihres PW ausgegeben.

In einer alternativen Ausführungsform ist die Ausgabeeinheit konfiguriert Daten an die verschiedene Ansteuereinheiten 105a, 105b zu senden, wobei die Ansteuereinheiten 105a, 105b entweder dem gleichen oder jeweils einem anderen definiertem Gebiet zugeordnet sind.

Die Ansteuereinheit 105 sendet die Daten an die Ausgabevorrichtungen 32, 33, 34. Die Ausgabevorrichtung 32 kann beispielsweise eine Stromtankstelle sein. Die Ausgabevorrichtung 33 kann beispielsweise eine Straßenlaterne sein. Die Ausgabevorrichtung 34 kann beispielsweise eine Werbetafel sein.

Fig. 2. zeigt eine Ausführungsform der Erfindung für die Verteilung von Daten an einer Straße 1.

In einer Ausführungsform der Erfindung sind die Empfangseinheit 101a, 101b, die erste Analyseeinheit 102a, 102b, die Speichereinheit 50 für die Datensammlungen 400 und 410 in sowie die Ausgabeeinheit 104 einer Plattformsteuerung 10 zusammengefasst.

Die Plattformsteuerung 10 ist über eine Datenleitung 201 mit einer Vermittlungsstelle 21 eines Telekommunikationsnetzes 200 operativ verbunden. Die Vermittlungsstelle 21 ist über ein Glasfaser-Hauptkabel 202 mit einem MFG 22 verbunden. In einem MFG 22 befindet sich ein DSL-Zugangsmultiplexer 203 der mit einem Powerline Communication (PLC) [5] - Adapter 40 verbunden ist. Der PLC-Adapter 40 in dem MFG 22 ist über das Energieversorgungsnetz 300 mit weiteren PLC-Adaptern 40 in den Ausgabevorrichtungen 32, 33, 34 verbunden. Die Ausgabevorrichtungen 32, 33, 34 ist mit dem MFG 22 im Energieversorgungsnetz 300 im Bereich einer Transformatorenstation über das Energieversorgungsnetz 300 untereinander verbunden.

In einer nicht dargestellten alternativen Ausführungsform ist die Plattformsteuerung 10 über ein Kabelfernsehnetz mit einer Ansteuereinheit in einem Kabelverteiler im definierten Gebiet verbunden. Im Kabelverteiler befindet sich ein PLC-Adapter 40 der die Daten über das Energieversorgungsnetz 300 an die Ausgabevorrichtungen 32, 33, 34 sendet.

In einer bevorzugten Ausführungsform verfügt die Plattformsteuerung 19 über mehrere Soft- und/oder Hardwarekomponenten. In einer alternativen Ausführungsform ist die Plattformsteuerung 10 vollständig als Software ausgeführt.

In einer Ausführungsform der Erfindung ist die Ansteuereinheit 105 in einem MFG 22 eines Telekommunikationsnetzbetreibers ausgeführt. Der Datenaustausch zwischen der Ausgabeeinheit 104 in der Plattformsteuerung 10 und der Ansteuereinheit 105 findet über ein Telekommunikationsnetz 200 statt. In einer bevorzugten Ausführungsform wird dazu eine Verbindung 201 zu einer Vermittlungsstelle 21 und ein Glasfaser-Hauptkabel 202 von der Vermittlungsstelle 21 zum MFG 22 genutzt.

Innerhalb des MFG wird die Datenverbindung in das Telekommunikationsnetz 200 über den DSL-Zugangsmultiplexer 203 und eine Datenverbindung in das Energieversorgungsnetz 300 über den PLC-Adapter 40 für die Ansteuereinheit 105 bereit gestellt.

In einer bevorzugten Ausführungsform tauscht die Ansteuereinheit 105 Daten mit der Ausgabeeinheit 104 in der Plattformsteuerung 10 über das Telekommunikationsnetz 200 und tauscht diese dann weiter mit den Ausgabevorrichtungen 32, 33, 34 über das Energieversorgungsnetz 300 aus. Die Ausgabevorrichtungen 32, 33, 34 empfangen die Daten und geben diese akustisch und/oder optisch wieder.

Die Ausgabeeinheit 104 in der Plattformsteuerung 10 stellt dabei sicher, dass die Daten gemäß des DSPW und PW ausgegeben werden.

Zusätzlich bevorzugt, aber in Fig. 2 nicht dargestellt, verfügen die Ausgabevorrichtungen 32, 33, 34 über eine Broadcastingeinrichtung mit oder ohne eigenen PLC-Adapter 40. Die Broadcastingeinrichtung erlaubt eine Weitergabe der Daten an alle verfügbaren Endgeräte im definierten Gebiet.

Aus der Beschreibung ergibt sich ein Verfahren, das es ermöglicht, ein und dasselbe zuvor beschriebene System in einem Normalbetrieb für die Verbreitung von Informationen im öffentlichen Raum zu nutzen und das System in einem Katastrophenwarnbetrieb für die Ausgabe von Katastrophenwarnmeldungen an die lokale Öffentlichkeit zu nutzen.

Mit anderen Worten zeigt Fig. 2 ein System, das geeignet ist, die Kommunikation zwischen unterschiedlichen Infrastrukturelementen im öffentlichen Raum zu gewährleisten. Es sind Werbetafeln 34 und Straßenlaternen 33 enthalten, die jeweils ohnehin schon über das Energieversorgungsnetz, genauer das Energieversorgungsnetzt im Bereich einer Transformatorenstation, zur Stromversorgung angebunden sind. Zudem gibt es in dem Bereich in einem Multifunktionsgehäuse 22 bzw. Kabelverteiler des Telekommunikationsnetzes 200 aktive DSL-Multiplexer-Technik 203 für den Breitbandzugang für den Massenmarkt, die zur Stromversorgung ebenfalls an das Energieversorgungsnetz 300 angebunden ist. Die Straßenlaternen 33 sind einerseits bevorzugt mit Leuchtmitteln ausgestattet, die über optische Freiraumübertragung wie die VLC-Kommunikationstechnik sowie optional WLAN-Zugangspunkte und weitere Kommunikationstechniken, bevorzugt Bluetooth oder ZigBee, verfügen und andererseits über den Stromanschluss auch als Stromtankstelle 32 für Elektromobile dienen. Im MFG 22 ist ein PLC-Adapter 40 enthalten, der die aus dem Energieversorgungsnetz 300 von den einzelnen angeschlossenen Infrastrukturelementen, mittels PLC erhaltenen, Kommunikationssignale über Ethernet und DSL an das Telekommunikationsnetz 200 weiterzuleiten. Von dort erfolgt eine weitere Verarbeitung bevorzugt in einem zentralen Datacenter 10 oder einer sogenannten Cloud.

PLC ist ein Datenübertragungsstandard, der die Daten auf einem shared medium, d.h. dem Stromversorgungsnetz 300 der Niederspannungsebene überträgt. Die Daten werden an alle an dem Zweig des Niederspannungssegments angeschlossenen Geräte bzw. PLC-Adapter 40 verteilt.

Daher und aufgrund der Eigenschaften des Mediums ist die übertragbare Bitrate begrenzt, aber ausreichend für Anwendungsfälle mit niederbitratiger Anwendung, bevorzugt die Steuerung oder Abrechnung von Stromtankvorgängen an Stromtankstellen.

Das System ist neben der Anwendung im öffentlichen Raum im Freien, bevorzugt in kleineren Ortschaften mit funktionierender Straßenbeleuchtung, die dann auch mit für Kommunikation genutzt wird, prinzipiell auch für die Nutzung in öffentlichen Gebäude, bevorzugt Bahnhöfen, Flughäfen, oder Einkaufszentren geeignet.

Das beschriebene System kann in verschiedenen Betriebsmodi genutzt werden. Dabei wird zwischen Standardnutzung oder Normalbetrieb und der Nutzung im Katastrophenwarnfall unterschieden.

In einer Ausführungsform der Standardnutzung erfolgt durch den Datenaustausch eine Abrechnung der Ladeoperationen bei Elektromobilen, die an Straßenlaternen 33 als mit Stromtankstellen 32 Zusatzfunktion aufgeladen werden.

In einer ergänzenden oder alternativen Ausführungsform der Erfindung bei der Standardnutzung wird eine Person, die in der Nähe einer Straßenlaterne 33 steht, von einer Werbetafel 34 über ein bestimmtes Produkt das aktuell angeboten wird, eine Promotion Code oder ein Restaurant informiert. Die Nutzung der Werbetafeln 34 für Werbezwecke zeichnet sich durch eine eine Burstartige Downstream-Übertragung aus und zeichnet sich weiter dadurch aus, dass der lokale Datenspeicher bevorzugt durch eine Gemeindevertretung, durch das Rathaus und/oder durch ortsansässige Geschäfte gefüllt. Diese LBS können auf diese Weise die Attraktivität von Gemeinden oder bestimmten Plätzen steigern.

In einer Ausführungsform der der Erfindung bei Nutzung im Katastrophenwarnfall wird das System zur Notrufaussendung und/oder Notrufanzeige genutzt.

Bei neuen Straßenlaternen 33 wird bevorzugt eine PLC-Anbindung 40 und/oder mindestens eine weitere Broadcastingeinrichtung, bevorzugt WLAN, VLC, Bluetooth, oder ZigBee installiert; bestehende Straßenlaternen 33 können nachgerüstet werden.

In einer Ausführungsform der Erfindung bei Nutzung im Katastrophenwarnfall werden Informationselemente, bevorzugt Autohupen, -lampen, -blinker zur Ausgabe der Daten genutzt. Ferner werden auch Werbetafeln zur Ausgabe der Daten genutzt. Dadurch werden auch Menschen mit Hör- bzw. Sehbeeinträchtigung alarmiert.

In einer Ausführungsform der Erfindung bei Nutzung im Katastrophenwarnfall werden Fahrzeuge, die an einer Stromtankstelle und/oder an einer Straßenlaterne im definierten Gebiet angeschlossen sind, durch das System, über ein PLC-Modem 40 im Auto dazu aufgefordert, in einem unverwechselbaren Rhythmus zu hupen und/oder die Warnblinkanlage einzuschalten.

In einer Ausführungsform der Erfindung bei Nutzung im Katastrophenwarnfall werden zur Ausgabe von Warnsignalen zu einer bestimmten Notsituation Straßenlaternen nutzt, die Ausgabe erfolgt bevorzugt codiert über den Blink-Rhythmus. Die über das Stromnetz 300 angebundenen Straßenlaternen 33 blinken rhythmisch und die Straßenlaternen senden außerdem Informationen mit einer Broadcastingeinrichtung bevorzugt über WLAN, Bluetooth und/oder VLC an umliegend erreichbare Endgeräte, bevorzugt Handys, Laptops, Tabletts, oder Navigationssysteme im Auto.

In einer Ausführungsform der Erfindung bei Nutzung im Katastrophenwarnfall können neben speziellen Katastrophenwarn-Apps auch andere geeignete Apps angesprochen werden, bevorzugt Radio-Apps weiter bevorzugt solche, die von einem Betreiber oder Hersteller vorinstalliert sind. Ebenso können Werbetafeln angesprochen werden und für die Ausgabe von Warninformationen mit benutzt werden.

In einer Ausführungsform der Erfindung laufen in der Plattformsteuerung 10 alle Daten zur Auswertung der regionalen Relevanz von Warninformationen der zuständigen Behörden und Info-Daten von lokal ansässigen Geschäften, Firmen, Infrastrukturbetreiber, sowie der regionalen Verwaltung zusammen.

Für den Erhalt der Warninformationen ist die Plattformsteuerung 10 in das System SatWaS/MoWaS des Bundesamtes für Bevölkerungsschutz und Katastrophenhilfe als weiterer Übertragungsweg eingebunden [4]. Das System sortieren die für das jeweilige definierte Gebiet relevanten Daten heraus und überträgt diese zur Ausgabe an die erreichbaren Ausgabevorrichtungen, bevorzugt Laternen, Smartphones, Autos und Werbetafeln zur Signalisierung durch Blinken und Hupen bzw. durch und Anzeige der Warninformationen.

Für den Normalbetrieb werden in der Plattformsteuerung 10 Info-Daten der registrierten Nutzer und Betreiber gesammelt und an die erreichbaren Ausgabegeräte ausgesendet. Nutzer sind bevorzugt lokale Geschäfte, Läden und Unternehmen aber auch die lokalen Behörden bevorzugt Landkreis, Stadt-/Gemeindeverwaltung. Betreiber sind bevorzugt Infrastrukturfirmen, die die Werbetafeln, Laternen, Stromtankstellen und/oder Telekommunikations- und Stromnetze betreiben.

In einer Ausführungsform der Erfindung stellt die Plattformsteuerung 10 ein webbasiertes Informationsportal für die jeweiligen Nutzer- und Betreiber zur Verfügung und stellt sicher, dass die zu erreichenden Nutzer über die passenden Infrastrukturen informiert werden können.

In einer Ausführungsform der Erfindung im Normalbetrieb werden auf den Ausgabevorrichtungen, bevorzugt auf den Informations- und Werbetafeln, lokale Informationen und Werbeinformationen ausgegeben. Geht eine Katastrophenmeldung ein, werden die Informationstafeln mit den entsprechenden Warnmeldungen belegt. Weiter Ausgabeeinrichtungen werden soweit wie möglich einbezogen und Warnmeldungen und - signale werden ausgegeben. Ist der Katastrophenfall vorüber, wird wieder auf den Normalbetrieb zurückgeschaltet. Die Steuerung und Kontrolle der jeweiligen Betriebsmodi wird durch die Plattformsteuerung 10 übernommen. Zusammenfassend kann gesagt werden, dass sich zwei Fälle mit dem System abbilden und effizient betreiben lassen, da auf eine gemeinsame Infrastruktur zugegriffen wird.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

### Referenzen:

[1] KATWARN: http://www.katwarn.de/
[2] NINA: http://www.bbk.bund.de/DE/NINA/Warn-App_NINA.html
[3] MoWaS: http://www.bbk.bund.de/DE/AufgabenundAusstattung/Krisenmanagement/WarnungderBevoe lkerung/Warnmittel/MoWaS/MoWaS_einstieg.html
[4] http://www.bbk.bund.de/SharedDocs/Bilder/BBK/DE/SampleBilder/MoWaS-Ueberblick.jpg;jsessionid=B79ECCF5A2FC787C66005E3BE1584B27.1_cid330?_blob=pos ter&v=5
[5] PLC: https://de.wikipedia.org/wiki/PowerLAN
[6] VLC: https://de.wikipedia.org/wiki/Visible_Light_Communications

## Patentansprüche

1. Verfahren zum Verteilen von Daten, die Informationen aufweisen, in mindestens einem definierten Gebiet, wobei das Verfahren folgende Verfahrensschritte aufweist:
a) Empfangen der Daten von mindestens einer Informationsquelle;
b) Automatisiertes Feststellen eines Gebietsrelevanzwertes der empfangenen Daten zu einem definierten Gebiet;
c) Automatisiertes Feststellen eines Prioritätswertes der empfangenen Daten;
d) Speichern der empfangenen Daten zusammen mit dem zugehörigen Gebietsrelevanzwert zu dem definierten Gebiet und dem zugehörigen Prioritätswert in mindestens einer Datensammlung; und
e) Akustische und/oder optische Ausgabe der Daten aus der Datensammlung in dem definierten Gebiet abhängig von dem zugehörigen Gebietsrelevanzwert für das definierte Gebiet und dem Prioritätswert.

2. Verfahren nach Anspruch 1, wobei die Daten zusammen mit dem zugehörigen Gebietsrelevanzwert zu dem definierten Gebiet abhängig von dem zugehörigen Prioritätswert in einer von mindestens zwei Datensammlungen gespeichert werden, jeder Datensammlung ein Datensammlung-Prioritätswert zugeordnet wird, und sich die Datensammlung-Prioritätswerte unterscheiden.

3. Verfahren nach Anspruch 2, wobei der Verfahrensschritt e) folgende Verfahrensschritte aufweist:
e1) Überprüfen ob Daten in der Datensammlung mit dem höchsten Datensammlung-Prioritätswert vorhanden sind und
e2) falls in der Datensammlung mit dem höchsten Datensammlung-Prioritätswert Daten vorhanden sind, Ausgeben der Daten abhängig von dem Prioritätswert der Daten,
e3) falls in der Datensammlung keine Daten vorhanden sind, Verwenden des in absteigender Reihe folgenden Datensammlung-Prioritätswertes und Wiederholen der Schritte e1) und e2).

4. Verfahren nach einem der Ansprüche 1 bis 3, wobei die Daten zur akustischen und/oder optischen Ausgabe an mindestens eine Ansteuereinheit gesendet werden, wobei die Ansteuereinheit dem definierten Gebiet zugeordnet ist.

5. Verfahren nach Anspruch 4, wobei die Daten zur akustischen und/oder optischen Ausgabe von der Ansteuereinheit an mindestens eine akustische und/oder optische Ausgabevorrichtung gesendet werden, wobei sich die akustische und/oder optische Ausgabevorrichtung in dem definierten Gebiet befindet; und wobei die akustische und/oder optische Ausgabevorrichtung die Daten in geeigneter Weise in dem definierten Gebiet ausgibt.

6. Verfahren nach Anspruch 4 oder 5, wobei die Ausgabeeinheit die Daten von und zu der Ansteuereinheit über ein Telekommunikationsnetz überträgt.

7. Verfahren nach Anspruch 6, wobei die Ansteuereinheit die Daten von und zu der akustischen und/oder optischen Ausgabevorrichtung über ein Telekommunikationsnetz und/oder ein Energieversorgungsnetz überträgt.

8. Verfahren nach einem der Ansprüchel bis 7, wobei Datenpakete empfangen werden, die von mindestens einer Informationsquelle gesendet werden, wobei die mindestens eine Informationsquelle Datenpakte sendet, die von kommerziellen Nutzern bereitgestellt werden.

9. Verfahren nach einem der Ansprüche 1 bis 8, wobei Datenpakete empfangen werden, die von mindestens einer Datenquelle gesendet werden, wobei die mindestens eine Informationsquelle Datenpakete sendet, die von Regierungs- und/oder Nicht-Regierungsorganisationen bereitgestellt werden und/oder die die öffentliche Sicherheit betreffen, und die Daten aus dieser Informationsquelle in der Datensammlung mit höchstem Datensammlung-Prioritätswert gespeichert werden.

10. System zum Verteilen von Daten, die Informationen aufweisen, in mindestens einem definierten Gebiet, wobei das System aufweist:
i) mindestens eine Empfangseinheit, die konfiguriert ist, die Daten von mindestens einer Informationsquelle zu empfangen;
ii) mindestens eine erste Analyseeinheit, die konfiguriert ist, einen Gebietsrelevanzwert für die empfangenen Daten zu einem definierten Gebiet automatisiert festzustellen;
iii) mindestens eine zweite Analyseeinheit, die konfiguriert ist, einen Prioritätswert für die empfangenen Daten automatisiert festzustellen;
iv) mindestens eine Speichereinheit, die konfiguriert ist, die empfangenen Daten zusammen mit dem Gebietsrelevanzwert zu dem definierten Gebiet und dem Prioritätswert in mindestens einer Datensammlung zu speichern; und
v) mindestens eine Ausgabeeinheit, die konfiguriert ist, die Daten aus der Datensammlung in dem definierten Gebiet akustisch und/oder optisch auszugeben abhängig von dem zugehörigen Gebietsrelevanzwert für das definierte Gebiet und dem Prioritätswert.

11. System nach Anspruch 10, wobei die mindestens eine Speichereinheit konfiguriert ist, die empfangenen Daten zusammen mit dem Gebietsrelevanzwert zu dem definierten Gebiet und dem Prioritätswert in mindestens einer von zwei Datensammlungen zu speichern, weiter konfiguriert ist jeder Datensammlung einen Datensammlung-Prioritätswert zuzuordnen, und sich die Datensammlung-Prioritätswerte unterscheiden.

12. System nach Anspruch 11, wobei die mindestens eine Ausgabeeinheit konfiguriert ist, zu überprüfen, ob in der Datensammlung mit dem höchsten Datensammlung-Prioritätswert Daten vorhanden sind, und:
falls in der Datensammlung mit dem höchsten Datensammlung-Prioritätswert Daten vorhanden sind, die Daten in Abhängigkeit vom Prioritätswert der Daten auszugeben; oder
falls in der Datensammlung mit dem höchsten Datensammlung-Prioritätswert keine Daten vorhanden sind, die Überprüfung zur wiederholen, wobei der in absteigender Reihenfolge folgende Datensammlungs-Prioritätswert verwendet wird.

13. System nach einem der Ansprüche 10 bis 12, wobei das System mindestens eine Ansteuereinheit umfasst,
die Ansteuereinheit konfiguriert ist mit der Ausgabeeinheit Daten auszutauschen; und
die Ausgabeeinheit konfiguriert ist die Daten zur akustischen und/oder optischen Ausgabe an die Ansteuereinheit zu senden, wobei die Ansteuereinheit dem definierten Gebiet zugeordnet ist.

14. System nach Anspruch 13, wobei das System mindestens eine akustische und/oder optische Ausgabevorrichtung umfasst, die akustische und/oder optische Ausgabevorrichtung konfiguriert ist mit der Ansteuereinheit Daten auszutauschen; und
die Ansteuereinheit konfiguriert ist die Daten zur akustischen und/oder optischen Ausgabe an die akustische und/oder optische Ausgabevorrichtung zu senden,
wobei sich die akustische und/oder optische Ausgabevorrichtung in dem definierten Gebiet befindet und die akustische und/oder optische Ausgabevorrichtung über Mittel verfügt, die Daten in geeigneter Weise in dem definierten Gebiet auszugeben.

15. System nach Anspruch 13, wobei die Ausgabeeinheit dazu konfiguriert ist, die Daten von und zu der Ansteuereinheit über ein Telekommunikationsnetz zu übertragen.

16. System nach Anspruch 14, wobei die Ansteuereinheit dazu konfiguriert ist, die Daten von und zu der akustischen und/oder optischen Ausgabevorrichtung über ein Telekommunikationsnetz und/oder ein Energieversorgungsnetz zu übertragen.

17. System nach einem der Ansprüche 10 bis 16, wobei die Empfangseinheit dazu konfiguriert ist Datenpakete zu empfangen die von mindestens einer Informationsquelle gesendet werden, wobei die mindestens eine Informationsquelle Datenpakete sendet, die von kommerziellen Nutzern bereitgestellt werden.

18. System nach einem der Ansprüche 10 bis 17, wobei die Empfangseinheit dazu konfiguriert ist Datenpakete zu empfangen, die von mindestens einer Informationsquelle gesendet werden, wobei die mindestens eine Informationsquelle Datenpakete sendet, die von Regierungs- und/oder Nicht-Regierungsorganisationen bereitgestellt werden und/oder die die öffentliche Sicherheit betreffen, und die Daten aus dieser Informationsquelle in der Datensammlung mit höchstem Datensammlung-Prioritätswert gespeichert werden.

19. System nach einem der Ansprüche 10 bis 18 oder Verfahren nach einem der Ansprüche 1 bis 9, wobei das definierte Gebiet mindestens eines der folgenden umfasst:
ein Gebiet im öffentlichen Straßenraum, ein Gebiet in einem öffentlichen und/oder nicht-öffentlichen Gebäude und/oder Gebäudekomplex.
